# EUROPEAN PATENT APPLICATION

(11) **EP 4 755 279 A1**
(43) Date of publication of application: **10.06.2026**
(21) Application number: 24860192.4
(22) Date of filing: 24.07.2024
(51) Int. Cl.: A47L 11/40

(54) **CLEANING DEVICE AND LIFTING STRUCTURE USED THEREIN**

(30) Priority: 30.08.2023 KR 20230114263; 16.02.2024 KR 20240022672
(71) Applicant: Samsung Electronics Co., Ltd., Suwon-si, Gyeonggi-do 16677 (KR)
(72) Inventor: KIM, Taksoo, Suwon-si, Gyeonggi-do 16677 (KR); KWON, Kihwan, Suwon-si, Gyeonggi-do 16677 (KR); KIM, Shin, Suwon-si, Gyeonggi-do 16677 (KR); KIM, Hyounsoo, Suwon-si, Gyeonggi-do 16677 (KR); SONG, Seokki, Suwon-si, Gyeonggi-do 16677 (KR); YUN, Minro, Suwon-si, Gyeonggi-do 16677 (KR)
(74) Representative: Walaski, Jan Filip
(86) International application number: PCT/KR2024/010748
(87) International publication number: WO 2025/048271

(57) **Abstract**

A lifting structure of a cleaning device according to an embodiment of the present disclosure includes a housing, a first bushing arranged rotatably in the housing, a second bushing that moves vertically and is rotatable with respect to the first bushing, and a middle bushing that is connected between the first bushing and the second bushing and moves vertically and is rotatable with respect to the first bushing and the second bushing.

## Description

### Technical Field

Embodiments relate to a cleaning device and a lifting structure used therein.

### Background Art

Cleaning devices are devices for cleaning a cleaning target surface, for example, a floor. Cleaning methods used by cleaning devices may include a dry method in which pollutants are removed by absorption and a wet method in which pollutants are wiped away by using water.

For wet cleaning, a cleaning device may include a wet pad arranged to be in contact with a cleaning target surface. Such a wet pad may be polluted in the process of removing the pollutants. When the cleaning device moves after completing the cleaning, a structure for lifting the polluted wet pad from the cleaning target surface may be considered for the cleaning device. In addition, the cleaning target surface may include an area unsuitable for wet cleaning. For example, when a carpet is on the floor, a structure for lifting the wet pad from the cleaning target surface regardless of whether the wet pad of the cleaning device is polluted may be considered for the cleaning device.

### Disclosure of Invention

### Solution to Problem

A cleaning device according to an embodiment includes a main body and a wet cleaning module provided in the main body.

The wet cleaning module may include at least one wet pad that is arranged detachably under the main body and is rotatable around a rotation axis, a lifting structure supporting the wet pad to enable rotation and vertical movement of the wet pad, and a driving unit configured to provide a rotational driving force to the lifting structure to enable the rotation and the vertical movement of the wet pad.

The lifting structure may include a housing, a first bushing configured to enable rotation by receiving the rotational driving force from the driving unit and fixed to an inside of the housing, a second bushing configured to deliver, when the first bushing rotates, a rotational driving force of the first bushing to the wet pad to enable the vertical movement and rotation of the wet pad, and a middle bushing connected between the first bushing and the second bushing and configured to enable a vertical movement and rotation by the rotational driving force of the first bushing when the first bushing rotates.

When the first bushing rotates, the middle bushing may move vertically and rotate, and when the middle bushing rotates, the second bushing may move vertically and rotate.

The lifting structure according to an embodiment may be used in a cleaning device and may support the wet pad to enable rotation and vertical movement of the wet pad.

The lifting structure may include a housing, a first bushing configured to enable rotatation with respect to the housing and fixed to an inside of the housing, a second bushing configured to deliver, when the first bushing rotates, a rotational driving force of the first bushing to the wet pad to enable the vertical movement and rotation of the wet pad, and a middle bushing connected between the first bushing and the second bushing and configured to enable a vertical movement and rotation by the rotational driving force of the first bushing when the first bushing rotates.

When the first bushing rotates, the middle bushing may move vertically and rotate, and when the middle bushing rotates, the second bushing may move vertically and rotate.

A cleaning device according to an embodiment includes a main body and a wet cleaning module provided in the main body.

The wet cleaning module may include at least one wet pad that is arranged detachably under the main body and is rotatable around a rotation axis, a lifting structure supporting the wet pad to enable rotation and vertical movement of the wet pad, and a driving unit configured to provide a rotational driving force to the lifting structure to enable the rotation and the vertical movement of the wet pad.

The lifting structure may include a housing, a first bushing configured to enable rotatation by receiving the rotational driving force from the driving unit and fixed to an inside of the housing, a middle bushing configured to enable a vertical movement and rotation by a rotational driving force received from the first bushing, and a second bushing configured to enable a vertical movement and rotation by a rotational driving force received from the middle bushing and to deliver a rotational driving force to the wet pad.

### Brief Description of Drawings

FIG. 1 is a perspective view of a cleaning device according to an embodiment of the present disclosure.
FIG. 2 is a diagram of the cleaning device of FIG. 1 viewed from the bottom.
FIG. 3 is a block diagram schematically illustrating a configuration of a wet cleaning module according to an embodiment.
FIG. 4 is a perspective assembly view of a lifting structure according to an embodiment.
FIG. 5 is a perspective exploded view of a lifting structure according to an embodiment.
FIG. 6 is a cross-sectional view of a lifting structure according to an embodiment.
FIG. 7 is a cross-sectional view of a lifting structure in a lift-down position according to an embodiment.
FIG. 8 is a cross-sectional view of a lifting structure in a lift-up position according to an embodiment.
FIG. 9 is a cross-sectional view illustrating a wet pad detached from a lifting structure according to an embodiment.
FIGS. 10 to 12 are each a diagram for illustrating another example of a lifting structure according to an embodiment.
FIG. 13 is a block diagram illustrating an example of a cleaning device according to an embodiment.
FIG. 14 is a perspective view of a cleaning device according to another embodiment of the present disclosure.
FIG. 15 is a perspective view of a cleaning device according to another embodiment of the present disclosure.

### Mode for the Invention

Hereinafter, example embodiments of the present disclosure are described in detail with reference to the description of the accompanying drawings. In the drawings, like reference numerals or symbols denote members or components performing substantially the same functions.

Terms that include an ordinal number such as "first," "second," etc. may be used to describe various components and are not intended to limit the components. The above terms are used only to distinguish one component from another. For example, a first component may be named as a second component, and similarly, a second component may be named as a first component without departing from the scope of rights of the present disclosure. The term "and/or" used herein to include a combination of a plurality of related items or any one item from among a plurality of related items.

The terms used in the present specification are merely used to describe embodiments, and are not intended to limit the embodiments. An expression used in the singular encompasses the expression of the plural, unless it has a clearly different meaning in the context. Further, terms such as "include" or "have" in various embodiments of the present disclosure are used to specify the existence of features, numbers, processes, operations, components, parts recited in the detailed description, or combinations thereof, and thus should not be understood as pre-excluding the existence or possibility for addition of one or more other features, numbers, processes, operations, components, parts, or combinations thereof. In the drawings, like reference numerals denote members performing substantially the same functions.

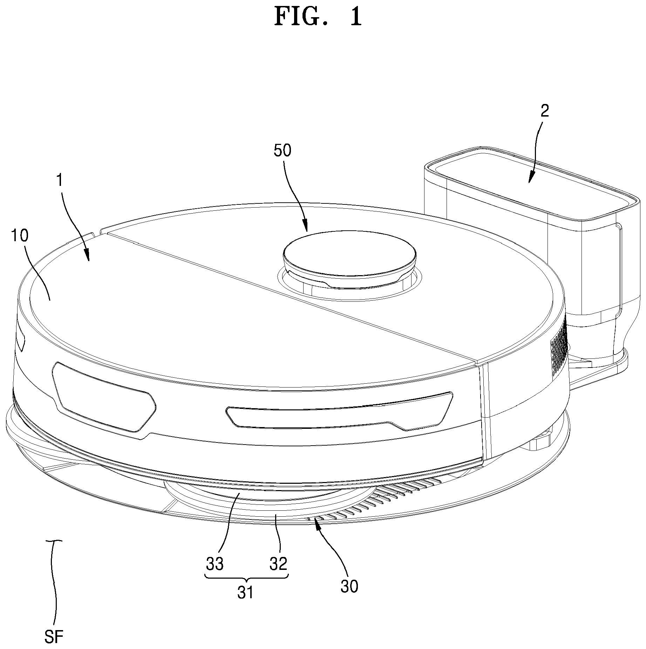

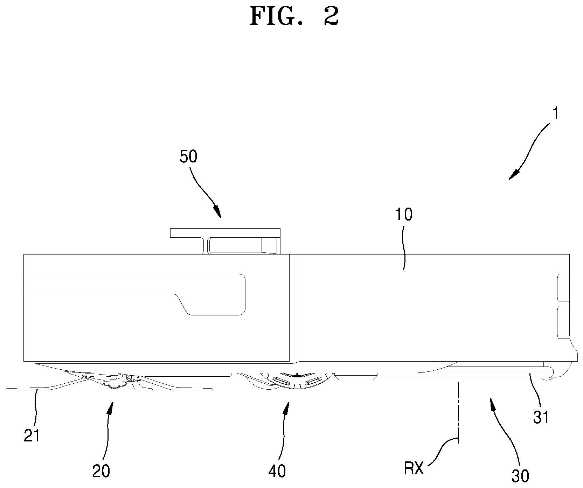

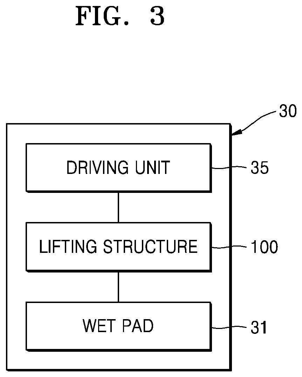

FIG. 1 is a perspective view of a cleaning device 1 according to an embodiment of the present disclosure, and FIG. 2 is a diagram of the cleaning device 1 of FIG. 1 viewed from the bottom. FIG. 3 is a block diagram schematically illustrating a configuration of a wet cleaning module 30 according to an embodiment.

Referring to FIGS. 1 and 2, the cleaning device 1 according to an embodiment may perform wet cleaning in which a cleaning target surface SF is cleaned by using a wet wipe. For example, the cleaning device 1 may include a main body 10 and the wet cleaning module 30 arranged in the main body 10. The cleaning device 1 according to an embodiment may also perform dry cleaning in which foreign substances on the cleaning target surface SF are sucked in. For example, the cleaning device 1 may further include a dry cleaning module 20 arranged in the main body 10.

Pollutants on the cleaning target surface SF may be sucked in and removed by the dry cleaning module 20 or may adhere to and be removed by a wet pad 31 of the wet cleaning module 30. The cleaning device 1 may perform only one of the dry cleaning or the wet cleaning, perform both of the dry cleaning and the wet cleaning, or perform the wet cleaning after the dry cleaning according to a user or a cleaning environment.

The main body 10 may form the exterior of the cleaning device 1. The main body 10 may have a circular structure or a polygonal structure. The wet cleaning module 30 and the dry cleaning module 20 may be arranged in the main body 10. A part of each of the wet cleaning module 30 and the dry cleaning module 20 may be exposed to the outside of the main body 10.

Although it is not shown in the drawings, a battery may be arranged in the main body 10. By the power of the battery, the cleaning device 1 may be driven (or moved) or perform cleaning operations. The battery may be charged by a station 2 when the cleaning device 1 is docked to the station 2.

The main body 10 may include a moving unit 40 which may drive on a two-dimensional (2D) plane. A sensor unit 50 may be arranged on the main body 10. The sensor unit 50 may sense information for obstacle recognition and cleaning map building. The sensor unit 50 may sense an indoor environment. The sensor unit 50 may sense at least one of a cleaning target and a pollutant. The sensor unit 50 may sense a cleaning target in liquid state or may sense a cleaning area that does not require wet cleaning, for example, a carpet, etc.

The sensor unit 50 may include a light detection and ranging (LiDAR) sensor. However, the present disclosure is not limited thereto, and the sensor unit 50 may be arranged on a lateral surface of the main body 10. The sensor unit 50 may further include a sensor other than a LiDAR sensor that is capable of identifying an external object.

The dry cleaning module 20 may be configured to suck in pollutants on the cleaning target surface SF. The dry cleaning module 20 may include a suction motor which generates a suction force and a dust container for storing sucked pollutants. The dry cleaning module 20 may further include a brush 21 that is rotatable for collecting pollutants.

Referring to FIGS. 1 to 3, the wet cleaning module 30 may include at least one wet pad 31. The wet pad 31 may be arranged detachably under the main body 10. The wet pad 31 may rotate around a rotation axis RX.

The wet pad 31 may include a pad member 32 that may be in contact with the cleaning target surface SF to enable wet cleaning of the cleaning target surface SF and a frame member 33 detachably supporting the pad member 32.

The wet pad 31 may include a plurality of wet pads. For example, the wet pad 31 may be a pair of wet pads 31 having the same size. However, the number and the size of wet pads 31 are not limited thereto and may vary. For example, although it is not shown in the drawings, the number of wet pads 31 may be at least 1 or 3. For example, although it is not shown in the drawings, the plurality of wet pads 31 may have different sizes from each other.

The wet cleaning module 30 may further include a driving unit 35 configured to generate a rotational driving force to enable rotation and vertical movement of the wet pad 31. The driving unit 35 may provide a first rotational driving force for rotating the wet pad 31 in the forward direction and a second rotational driving force for rotating the wet pad 31 in the backward direction. The cleaning target surface SF may be cleaned by the rotation of the wet pad 31 in contact with the cleaning target surface SF by the driving unit 35.

As described above, in the cleaning device 1 according to an embodiment, the wet pad 31 may be in contact with the cleaning target surface SF for wet cleaning. However, in the cleaning device 1 according to an embodiment, when the wet cleaning is not in the process, the wet pad 31 may not be in contact with the cleaning target surface SF. For example, when the cleaning device 1 moves to an area which does not need wet cleaning (e.g., a carpet, etc.) or goes past an obstacle, the wet pad 31 may not be in contact with the cleaning target surface SF. For example, when the wet pad 31 of the cleaning device 1 is contaminated, the wet pad 31 may not be in contact with the cleaning target surface SF to avoid additional contamination of the cleaning target surface SF.

The wet cleaning module 30 of the cleaning device 1 according to an embodiment of the present disclosure may include a lifting structure 100 supporting the wet pad 31 to enable the rotation and vertical movement of the wet pad 31. By using the lifting structure 100, the wet pad 31 may be rotated, and the height thereof may also be adjusted. The driving unit 35 may provide the rotational driving force to the lifting structure 100.

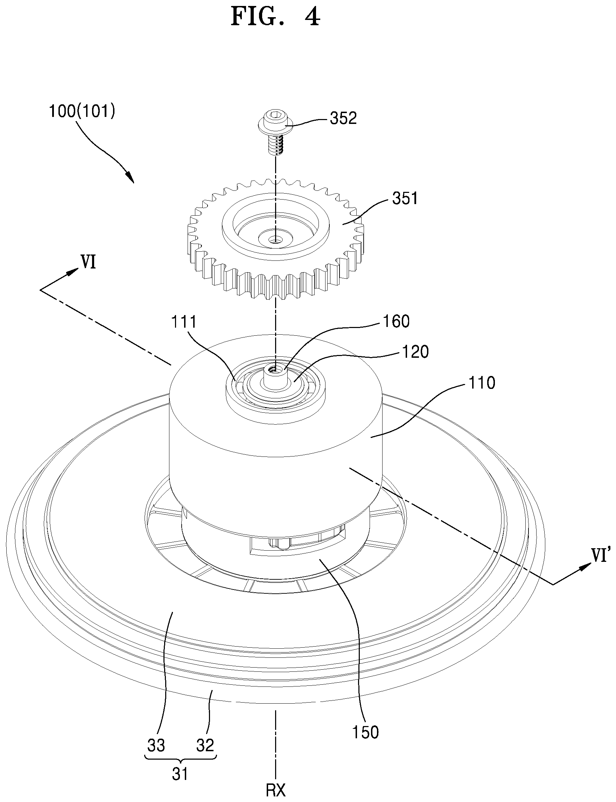

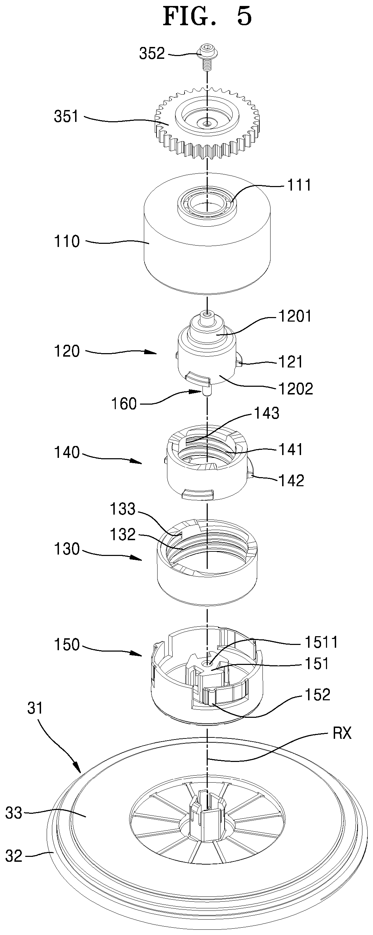

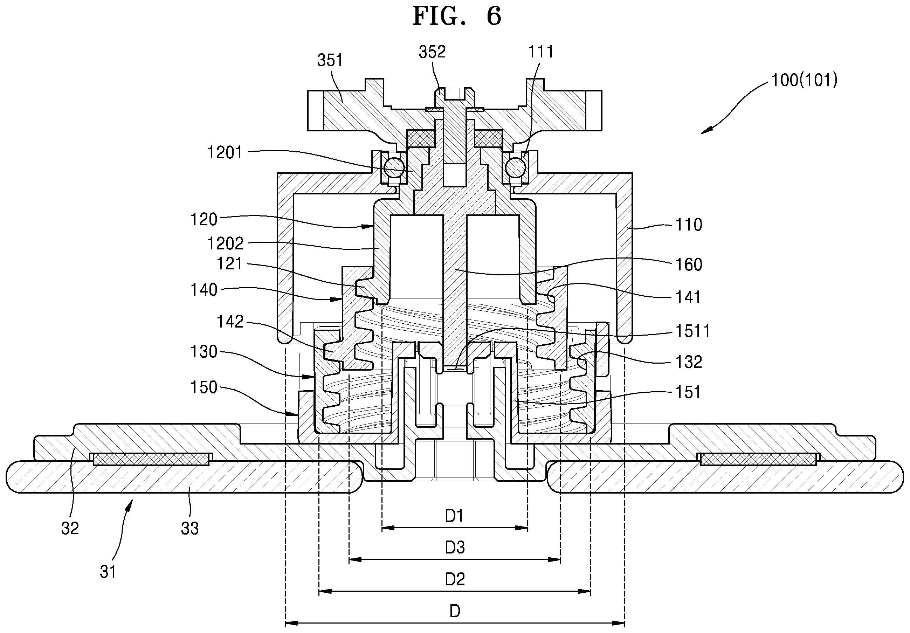

FIG. 4. is a perspective assembly view of the lifting structure 100 according to an embodiment, and FIG. 5 is an perspective exploded view of the lifting structure 100 according to an embodiment. FIG. 6 is a cross-sectional view of the lifting structure 100 according to an embodiment.

Referring to FIGS. 4 to 6, the lifting structure 100 according to an embodiment may include a housing 110, a first bushing 120, at least one middle bushing 140, and a second bushing 130. The first bushing 120, the middle bushing 140, and the second bushing 130 may be arranged to be coaxially rotatable. In other words, rotation axes RX of the first bushing 120, the middle bushing 140, and the second bushing 130 may be coaxially arranged.

The housing 110 may have a structure that is open at the bottom. Lateral surfaces of the inside of the housing 110 may not be parallel with the direction of the rotation axis RX in consideration of manufacturing processes of the housing 110 (e.g., mold design, etc.) For example, the inside of the housing 110 may have a width slightly increasing towards the bottom.

The first bushing 120 may be arranged in the housing 110. A diameter D or a width of the housing 110 may be greater than a first diameter D1 of the first bushing 120. An inner diameter of the housing 110 may be greater than a first outer diameter of the first bushing 120 arranged in the housing 110. At least a part of the middle bushing 140 and at least a part of the second bushing 130 may be arranged in the housing 110.

The position (or height) of the first bushing 120 may be fixed with respect to the housing 110. The first bushing 120 may be supported rotatably by the housing 110.

The first bushing 120 may include a supported area 1201 rotatably supported by the housing 110 and a connection area 1202 connected to the middle bushing 140. The width of the connection area 1202 may be greater than the width of the supported area 1201. The first bushing 120 may have a cylindrical structure, and the cross-section thereof may have a curved shape. The width of the connection area 1202 may correspond to the first diameter D1 of the first bushing 120.

A lower end portion of the first bushing 120 may be arranged higher than a lower end portion of the housing 110. A lower end portion of the connection area 1202 of the first bushing 120 may be arranged higher than the lower end portion of the housing 110.

A bearing 111 may be arranged between the housing 110 and the first bushing 120. The bearing 111 may be arranged between the housing 110 and the supported area 1201.

The first bushing 120 may be rotated by receiving the rotational driving force from the driving unit 35. The first bushing 120 may be mechanically connected to the driving unit 35. For example, the first bushing 120 may be connected to the driving unit 35 by at least one gear 351. For example, the first bushing 120 may be fixed to the gear 351 by a fixing member 352. The rotational driving force of the driving unit 35 may be delivered to the first bushing 120 through the gear 351. The driving unit 35 may be disposed at a side portion of the housing 110 other than an upper portion of the housing 110. When the driving unit 35 is disposed at a side portion of the housing 110, the height of the wet cleaning module 30 in the main body 10 may be reduced.

A rotation direction of the first bushing 120 may change according to the rotational driving force of the driving unit 35. When the driving unit 35 generates the first rotational driving force for rotation in a first direction, the first bushing 120 may rotate in the forward direction. When the driving unit 35 generates the second rotational driving force for rotation in a second direction opposite to the first direction, the first bushing 120 may rotate in the backward direction.

At least a part of the second bushing 130 may be arranged in the housing 110. The second bushing 130 may have a second diameter D2 that is different from the first diameter D1 and may rotate. The second bushing 130 may move vertically with respect to the first bushing 120. The second diameter D2 may be greater than the first diameter D1.

The second bushing 130 may rotate or move vertically by receiving the rotational driving force from the middle bushing 140 to be described later. The second bushing 130 may be configured to deliver the rotational driving force to the wet pad 31. When the first bushing 120 rotates, the second bushing 130 may be configured to deliver the rotational driving force of the first bushing 120 to the wet pad 31 to enable the vertical movement and rotation of the wet pad 31. The second bushing 130 may support the wet pad 31. For example, the second bushing 130 may support the wet pad 31 through a pad support 150 to be described later. Accordingly, when the second bushing 130 rotates or moves vertically, the wet pad 31 may rotate or move vertically along with the second bushing 130.

The second bushing 130 may be connected (or coupled) to the first bushing 120 by the middle bushing 140. However, the second bushing 130 is not necessarily connected to the first bushing 120 by the middle bushing 140, and the second bushing 130 may be directly connected to the first bushing 120 without the middle bushing 140 when necessary.

At least a part of the middle bushing 140 may be arranged in the housing 110. The middle bushing 140 may connect the first bushing 120 with the second bushing 130. The middle bushing 140 may have a middle diameter D3. The middle diameter D3 may be between the first diameter D1 and the second diameter D2. For example, the middle diameter D3 may be greater than the first diameter D1 and less than the second diameter D2.

The middle bushing 140 may be configured to enable vertical movement and rotation with respect to the first bushing 120 and the second bushing 130. The middle bushing 140 may be configured to enable vertical movement and rotation by receiving the rotational driving force from the first bushing 120.

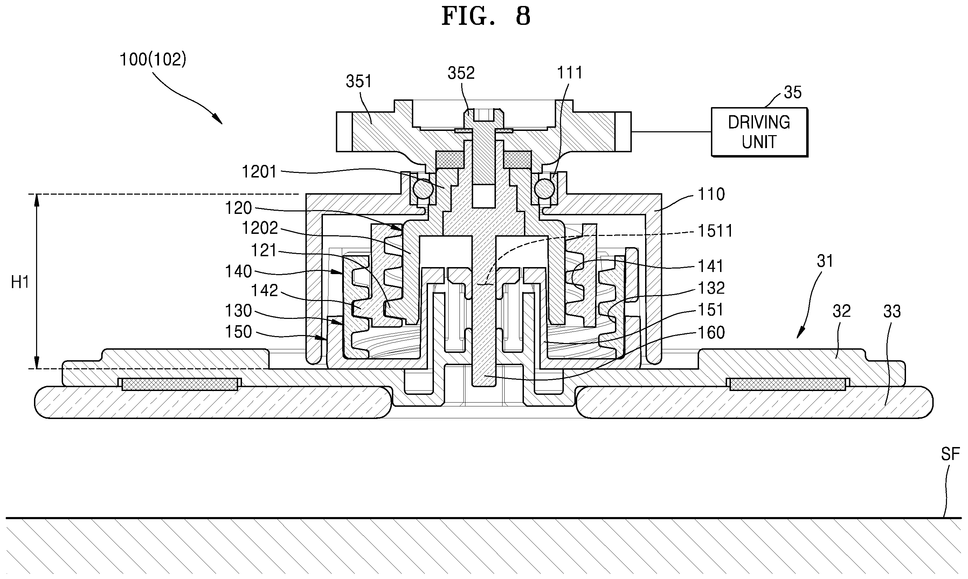

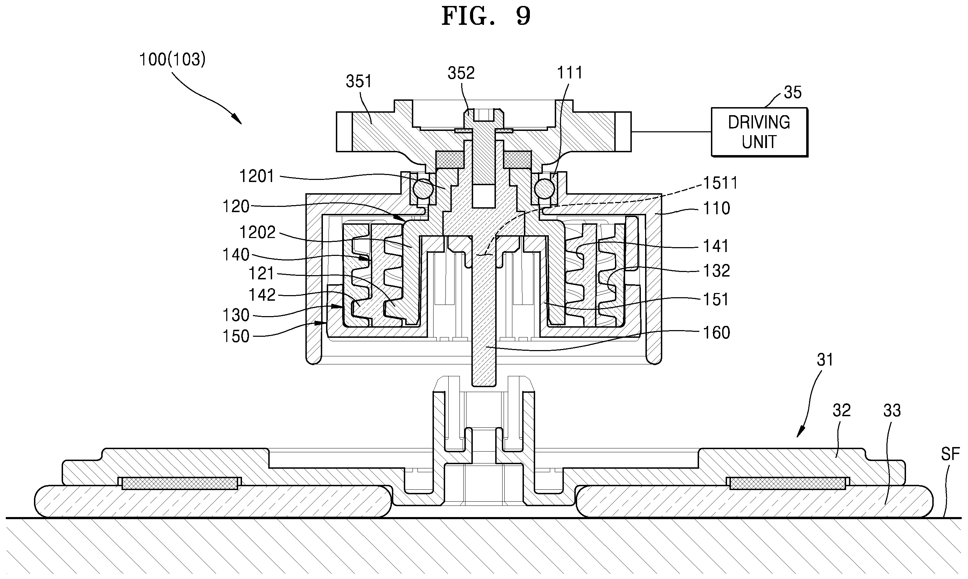

The middle bushing 140 may be configured to enable vertical movement with respect to the first bushing 120 when the first bushing 120 rotates. The middle bushing 140 may be configured to enable vertical movement with respect to the second bushing 130. The middle bushing 140 may be configured to receive the rotational driving force from the first bushing 120 and deliver the rotational driving force to the second bushing 130. When the first bushing 120 rotates, the middle bushing 140 may move vertically and rotate. When the middle bushing 140 rotates, the second bushing 130 may move vertically and rotate. Detailed operation of the first bushing 120, the middle bushing 140, and the second bushing 130 is to be described in relation to FIGS. 8 and 9.

As the middle bushing 140 is arranged between the second bushing 130 and the first bushing 120, the second diameter D2 of the second bushing 130 may be greater than the first diameter D1 of the first bushing 120 by at least the thickness of the middle bushing 140. The circumferential length of the second bushing 130 may be greater than the circumferential length of the first bushing 120. When the rotational driving force is delivered to the wet pad 31 through the second bushing 130 having a great circumferential length, the rotational driving force may be delivered through a relatively wide surface, as compared to the case where the rotational driving force is delivered to the wet pad 31 through the first bushing 120 having a less circumferential length. As the wet pad 31 receives the rotational driving force while being supported by a relatively wide surface through the second bushing 130, shaking due to an unintended external force applied to the wet pad 31 during the wet cleaning operation of the cleaning device 1 may be reduced. Accordingly, the lifting structure 100 of the cleaning device 1 according to an embodiment may have an advantage in absorption of shock or vibration applied to the wet pad 31 during the wet cleaning operation.

The middle bushing 140 and the first bushing 120 may be combined by thread connection. For example, any one of the first bushing 120 and the middle bushing 140 may include a first thread groove 141 inclined with respect to the rotation axis RX, and the other one of the first bushing 120 and the middle bushing 140 may include a first thread protrusion 121 inserted into the first thread groove 141. For example, the first thread groove 141 may be arranged on an inner circumferential surface of the middle bushing 140, and the first thread protrusion 121 engaged with the first thread groove 141 may be arranged on an outer circumferential of the first bushing 120. To facilitate the relative movement of the first thread protrusion 121 with respect to the first thread groove 141, the height and width of the first thread protrusion 121 may be less than the depth and width of the first thread groove 141.

The extension length of the first thread groove 141 may be greater than or equal to three times the inner diameter of the middle bushing 140. The extension length of the first thread groove 141 may be less than or equal to ten times the inner diameter of the middle bushing 140. However, the extension angle and length of the first thread groove 141 are not limited thereto and may vary according to time and height of the vertical movement of the middle bushing 140.

The first thread protrusion 121 may be arranged on a partial area of the outer circumferential surface of the first bushing 120. For example, the first thread protrusion 121 may be arranged on a lower area of the outer circumferential surface of the first bushing 120. The first thread protrusion 121 may be arranged discontinuously on the outer circumferential surface of the first bushing 120. For example, the first thread protrusion 121 may be arranged on the outer circumferential surface of the first bushing 120 at a distance in a circumferential direction.

A stopper blocking the relative movement of the first thread protrusion 121 may be arranged at at least one end of the first thread groove 141 in the length direction. For example, a first stopper 143 may be arranged at an upper end portion of the first thread groove 141. When the first thread protrusion 121 is in contact with the first stopper 143 of the first thread groove 141, the first bushing 120 and the middle bushing 140 may rotate together. When the first bushing 120 rotates in the forward direction while the relative movement of the first thread protrusion 121 is blocked by the first stopper 143, the middle bushing 140 may rotate in the forward direction along with the first bushing 120.

A lower end portion of the first thread groove 141 may be open without a stopper. As the lower end portion of the first thread groove 141 is open, the first bushing 120 and the middle bushing 140 may be assembled such that the first thread protrusion is inserted into the first thread groove 141.

When the first bushing 120 rotates in the backward direction while the middle bushing 140 is risen to overlap with the first bushing 120, the middle bushing 140 may rotate in the backward direction along with the first bushing 120. For example, the middle bushing 140 may be risen to be in contact with the inner surface of the housing 110. Before the first thread protrusion 121 falls into the lower end portion of the first thread groove 141, the middle bushing 140 may be in contact with the inner surface of the housing 110. In other words, as the rising height of the middle bushing 140 is limited by the contact with the housing 110, the first thread protrusion 121 may not fall into the first thread groove 141. Accordingly, by the first thread protrusion 121 and the first thread groove 141, the rotational driving force of the first bushing 120 may be delivered to the middle bushing 140, and the middle bushing 140 may rotate in the backward direction along with the first bushing 120.

The middle bushing 140 and the second bushing 130 may be combined by thread connection. For example, any one of the middle bushing 140 and the second bushing 130 may include a second thread groove 132 inclined with respect to the rotation axis RX, and the other one of the middle bushing 140 and the second bushing 130 may include a second thread protrusion 142 inserted into the second thread groove 132. For example, the second thread groove 132 may be arranged in an inner circumferential surface of the second bushing 130. An outer circumferential surface of the middle bushing 140 may include the second thread protrusion 142 combined with the second thread groove 132 arranged in an inner circumferential surface of the second bushing 130. To enable the relative movement of the second thread protrusion 142 with respect to the second thread groove 132, the height and width of the second thread protrusion 142 may be less than the depth and width of the second thread groove 132.

The extension length of the second thread groove 132 may be greater than or equal to three times the inner diameter of the second bushing 130. The extension length of the second thread groove 132 may be less than or equal to ten times the inner diameter of the second bushing 130. However, the extension angle and length of the second thread groove 132 are not limited thereto and may vary according to time and height of the vertical movement of the second bushing 130.

The second thread protrusion 142 may be arranged on a partial area of the outer circumferential surface of the middle bushing 140. For example, the second thread protrusion 142 may be arranged on a lower area of the outer circumferential surface of the middle bushing 140. The second thread protrusion 142 may be arranged discontinuously on the outer circumferential surface of the middle bushing 140. For example, the second thread protrusion 142 may be arranged on the outer circumferential surface of the middle bushing 140 at a distance in a circumferential direction.

A stopper blocking the relative movement of the second thread protrusion 142 may be arranged at at least one end of the second thread groove 132 in the length direction. For example, a second stopper 133 may be arranged at an upper end portion of the second thread groove 132. When the second thread protrusion 142 is in contact with the second stopper 133 of the second thread groove 132, the middle bushing 140 and the second bushing 130 may rotate together. When the middle bushing 140 rotates in the forward direction while the relative movement of the second thread protrusion 142 is blocked by the second stopper 133, the second bushing 130 may rotate in the forward direction along with the middle bushing 140.

A lower end portion of the second thread groove 132 may be open without a stopper. As the lower end portion of the second thread groove 132 is open, the middle bushing 140 and the second bushing 130 may be assembled such that the second thread is inserted into the second thread groove 132.

When the middle bushing 140 rotates in the backward direction while the middle bushing 140 is risen to overlap with the second bushing 130, the second bushing 130 may rotate in the backward direction along with the middle bushing 140. For example, the second bushing 130 or the pad support 150 combined with the second bushing 130 may rise to be in contact with the inner surface of the housing 110. Before the second thread protrusion 142 falls into the lower end portion of the second thread groove 132, the second bushing 130 may be in contact with the inner surface of the housing 110. In other words, as the rising height of the second bushing 130 is limited by the contact with the housing 110, the second thread protrusion 142 may not fall into the second thread groove 132. Accordingly, by the second thread protrusion 142 and the second thread groove 132, the rotational driving force of the middle bushing 140 may be delivered to the second bushing 130, and the second bushing 130 may rotate in the backward direction along with the middle bushing 140.

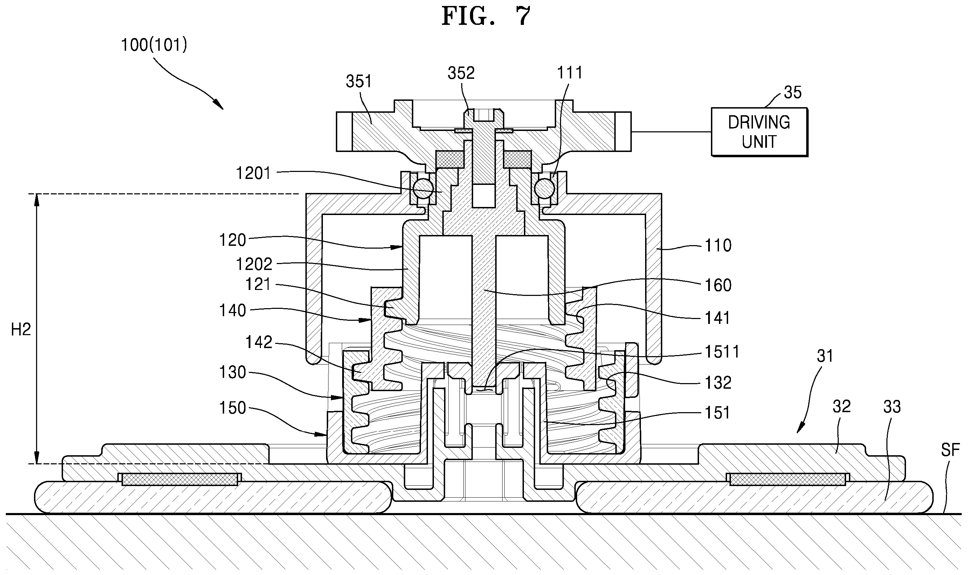

Such thread connection structure between the first bushing 120 and the middle bushing 140 and thread connection structure between the middle bushing 140 and the second bushing 130 may enable the vertical movement and rotation of the middle bushing 140 and the second bushing 130. Through the vertical movement of the middle bushing 140 and the second bushing 130, the lifting structure 100 may adjust a vertical position of the wet pad 31. The lifting structure 100 may have a lift-up position 102 (see FIG. 8) in which the wet pad 31 is risen and a lift-down position 101 (see FIG. 7) in which the wet pad 31 is fallen.

As such, by adjusting the vertical position of the wet pad 31, the lifting structure 100 may drop the wet pad 31 such that the wet pad 31 is in close contact with the cleaning target surface SF when the wet cleaning is needed and may lift up the wet pad 31 such that the wet pad 31 is apart from the cleaning target surface SF or an obstacle when the wet cleaning is not needed. As the lifting structure 100 includes the structure in which the first bushing 120 and the second bushing 130 are connected to each other by the middle bushing 140, a height adjustment range of the wet pad 31 may be wider as compared to the structure in which the first bushing 120 is directly connected to the second bushing 130. Accordingly, the lifting structure 100 may lift up the wet pad 31 even higher to avoid an obstacle or drop the wet pad 31 even lower such that the wet pad 31 is in close contact with the cleaning target surface SF to apply more pressure on the cleaning target surface SF.

In addition, when a shock is applied to the wet pad 31, the second bushing 130 and the middle bushing 140 of the lifting structure 100 may move in an upward direction. As such, when a shock is applied to the wet pad 31, the second bushing 130 and the middle bushing 140 may move in the upward direction, thereby absorbing the shock, and accordingly, transmission of the shock to the first bushing 120 and the driving unit 35 may be minimized. In this manner, the durability of the lifting structure 100 may be improved.

The lifting structure 100 may further include the pad support 150 fixed to the second bushing 130. As the pad support 150 is fixed to the second bushing 130, the rotational driving force of the second bushing 130 may be delivered to the pad support 150, and the pad support 150 may rotate around the same rotation axis RX as the second bushing 130 in the same direction.

The pad support 150 may be arranged to surround at least a part of the second bushing 130. The pad support 150 is open at the top and may surround the outer circumferential surface of the second bushing 130. The pad support 150 may include a protrusion portion 151 to be inserted into the second bushing 130.

The width of the protrusion portion 151 may be less than the inner diameter of the second bushing 130. The width of the protrusion portion 151 may be less than the inner diameter of the middle bushing 140. The width of the protrusion portion 151 may be less than the inner diameter of the first bushing 120. Accordingly, when the second bushing 130, the middle bushing 140, and the first bushing 120 overlap each other, the protrusion portion 151 may be inserted into the first bushing 120.

The width of the pad support 150 may be greater than the width of the first bushing 120. The width of the pad support 150 may be greater than the width of the middle bushing 140. The width of the pad support 150 may be greater than the width of the second bushing 130. The width of the pad support 150 may be less than the inner diameter of the housing 110.

The frame member 33 of the wet pad 31 may be detachably combined with the pad support 150. The protrusion portion 151 of the pad support 150 may be detachably assembled with the frame member 33. For example, the frame member 33 and the pad support 150 may be combined with each other by hook coupling. For example, the frame member 33 may be hook-coupled with the protrusion portion 151 of the pad support 150. However, the coupling between the frame member 33 and the pad support 150 is not limited thereto and may vary.

The frame member 33 of the wet pad 31 may have a disk shape. The pad member 32 may be detachably attached to the frame member 33. For example, the pad member 32 may be attached to the frame member 33 by a hook-and-loop method. However, the coupling method between the pad member 32 and the frame member 33 is not limited thereto and may vary.

The housing 110 may cover at least a part of each of the first bushing 120, the middle bushing 140, and the second bushing 130. For example, the housing 110 may cover at least a part of each of the middle bushing 140 and the second bushing 130 such that the connection between the middle bushing 140 and the second bushing 130 is not exposed to the outside. For example, the housing 110 may cover at least a part of each of the middle bushing 140 and the second bushing 130 such that the second thread protrusion 142 and the second thread groove 132 of the middle bushing 140 and the second bushing 130 are not exposed to the outside.

The lifting structure 100 according to an embodiment may be configured such that a frictional force is applied between the second bushing 130 and the housing 110. For example, the frictional force may be applied between the housing 110 and the pad support 150 fixed to the second bushing 130. The pad support 150 may include a friction portion 152 arranged outside of the second bushing 130. The friction portion 152 may be in contact with the housing 110 such that a frictional force is applied between the housing 110 and the second bushing 130. The friction portion 152 may be configured to contact and press the inner surface of the housing 110. For example, the friction portion 152 may be elastically deformed towards the inner surface of the housing 110.

The friction portion 152 may be in contact with the inner surface of the housing 110, and a frictional force may be applied between the pad support 150 and the housing 110. Accordingly, a frictional force may be applied between the housing 110 and the second bushing 130 fixed to the pad support 150. As the frictional force is applied between the second bushing 130 and the housing 110, when the rotational driving force is provided from the driving unit 35, the first bushing 120 may rotate, and the middle bushing 140 and the second bushing 130 may move vertically with respect to the first bushing 120. For example, when the first bushing 120 rotates in the forward direction, the middle bushing 140 and the second bushing 130 may fall with respect to the first bushing 120. For example, when the first bushing 120 rotates in the backward direction, the middle bushing 140 and the second bushing 130 may rise with respect to the first bushing 120.

The lifting structure 100 may further include a center pin 160 arranged inside the first bushing 120, the middle bushing 140, and the second bushing 130. The center pin 160 may extend along the rotation axis RX. A lateral surface of the center pin 160 may be parallel with the direction of the rotation axis RX. The center pin 160 may be arranged at a rotational center of the first bushing 120, the middle bushing 140, and the second bushing 130.

An upper end portion of the center pin 160 may be supported by the first bushing 120, and a lower end portion of the center pin 160 may be supported by the pad support 150. The lower end portion of the center pin 160 may be supported by the protrusion portion 151 of the pad support 150. The center pin 160 may a function of fixing the wet pad 31 such that the wet pad 31 secures its central position against a centrifugal force and vibration generated by the rotation of the wet pad 31.

The pad support 150 may include a through hole 1511 which surrounds the center pin 160 and through which the lower end portion of the center pin 160 passes. For example, the through hole 1511 may be provided at an end portion of the protrusion portion 151 of the pad support 150. When the pad support 150 of the second bushing 130 rises, the lower end portion of the center pin 160 may pass through the through hole 1511. The through hole 1511 may guide the vertical movement of the second bushing 130.

FIG. 7 is a cross-sectional view of the lifting structure 100 in a lift-down position according to an embodiment, and FIG. 8 is a cross-sectional view of the lifting structure 100 in a lift-up position according to an embodiment. FIG. 9 is a cross-sectional view illustrating the wet pad 31 detached from the lifting structure 100 according to an embodiment.

Referring to FIG. 7, the lifting structure 100 may have a lift-down position 101 in which the wet pad 31 is fallen to be in contact with the cleaning target surface SF. When the lifting structure 100 is in the lift-down position 101, in the lifting structure 100, the first bushing 120 and the second bushing 130 may not overlap each other in a direction perpendicular to the rotation axis RX. The first thread protrusion 121 of the first bushing 120 may be caught by the first stopper 143 of the first thread groove 141 of the middle bushing 140, and the second thread protrusion 142 of the middle bushing 140 may be caught by the second stopper 133 of the second thread groove 132 of the second bushing 130. Accordingly, when the first rotational driving force is provided by the driving unit 35, the first bushing 120, the middle bushing 140, and the second bushing 130 may rotate together in the forward direction. When the second bushing 130 rotates in the forward direction while the wet pad 31 is in contact with the cleaning target surface SF, the pad support 150 fixed to the second bushing 130 and the wet pad 31 fixed to the pad support 150 may rotate in the forward direction.

Referring to FIG. 7 and 8, when the driving unit 35 provides the lifting structure 100 with the second rotational driving force for rotation in the second direction opposite to the first direction, the first bushing 120 may rotate in the backward direction. As the frictional force is applied between the pad support 150 and the housing 110, when the first bushing 120 rotates in the backward direction, the middle bushing 140 may move in the upward direction by the first thread groove 141 and the first thread protrusion 121. After the middle bushing 140 is in contact with the inner surface of the housing 110, the middle bushing 140 may not move in the upward direction and rotate in the backward direction along with the first bushing 120. When the middle bushing 140 rotates in the backward direction, the second bushing 130 may move in the upward direction by the second thread groove 132 and the second thread protrusion 142. Accordingly, the lifting structure 100 may have a lift-up position 102 in which the first bushing 120, the middle bushing 140, and the second bushing 130 overlap each other in the direction perpendicular to the rotation axis RX.

The cleaning device 1 according to an embodiment may move while the lifting structure 100 is in the lift-up position 102.

When the lifting structure 100 is in the lift-up position 102, the total height of the lifting structure 100 may be a first height H1, and when the lifting structure 100 is in the lift-down position 101, the height of the lifting structure 100 may be a second height H2. A difference between the first height H1 and the second height H2 may be greater than or equal to 10 mm. The difference between the first height H1 and the second height H2 may be less than or equal to 100 mm. In this regard, a height from the upper surface of the housing 110 to the lower surface of the pad support 150 may be defined as the total height of the lifting structure 100.

When the lifting structure 100 is in the lift-up position 102, the driving unit 35 may operate to shift the lift-up position 102 to the lift-down position 101.

While the driving unit 35 is providing the first rotational driving force for rotation in the first direction, the first bushing 120 connected to the driving unit 35 by the gear 351 may rotate in the forward direction. The forward rotation of the first bushing 120 may be converted into a linear motion of the middle bushing 140 by the first thread protrusion 121 of the first bushing 120 and the first thread groove 141 of the middle bushing 140. Accordingly, the middle bushing 140 may move in the downward direction with respect to the first bushing 120. The middle bushing 140 may move in the downward direction until the first thread protrusion 121 is caught by the first stopper 143 of the first thread groove 141. After the first thread protrusion 121 is caught by the first stopper 143 of the first thread groove 141, the middle bushing 140 may rotate in the forward direction along with the first bushing 120.

The forward rotation of the middle bushing 140 may be converted into a linear motion of the second bushing 130 by the second thread protrusion 142 of the middle bushing 140 and the second thread groove 132 of the second bushing 130. Accordingly, the second bushing 130 may move in the downward direction. The second bushing 130 may move in the downward direction until the second thread protrusion 142 is caught by the second stopper 133 of the second thread groove 132. After the second thread protrusion 142 is caught by the the second stopper 133 of the second thread groove 132, the second bushing 130 may rotate in the forward direction along with the middle bushing 140. The pad support 150 supported by the second bushing 130 and the wet pad 31 supported by the pad support 150 may rotate in the forward direction. The wet pad 31 may rotate in the forward direction while the wet pad 31 is in contact with the cleaning target surface SF.

When there are a plurality of wet pads 31, forward directions may be different from each other. For example, when a single wet pad 31 rotates in a forward direction that is a clockwise direction, another wet pad 31 may rotate in a forward direction that is a counterclockwise direction.

When the wet cleaning is completed or stopped, the lifting structure 100 may switch to the lift-up position 102. To this end, the driving unit 35 may generate the second rotational driving force as described above.

Referring to FIG. 8, while the driving unit 35 is providing the second rotational driving force for rotation in the second direction, the first bushing 120 connected to the driving unit 35 by the gear 351 may rotate in the backward direction. When the first bushing 120 rotates in the backward direction, the first thread protrusion 121 and the first stopper 143 of the first thread groove 141 may be spaced apart from each other, and the first bushing 120 may rotate relatively to the middle bushing 140. The first bushing 120 may rotate relatively to the middle bushing 140 right before the middle bushing 140 becomes in contact with the inner surface of the housing 110. Accordingly, the middle bushing 140 thread-connected to the first bushing 120 may move in the upward direction with respect to the first bushing 120. Then, when the first bushing 120 continues to rotate in the backward direction, the middle bushing 140 may become in contact with the inner surface of the housing 110, and the middle bushing 140 may rotate in the backward direction along with the first bushing 120. When the middle bushing 140 rotates in the backward direction, the second bushing 130 may move in the upward direction with respect to the middle bushing 140 by the second thread protrusion 142 and the second thread groove 132.

The second rotational driving force of the driving unit 35 may stop before the second bushing 130 becomes in contact with the upper portion of the inner surface of the housing 110. For example, the rotation in the second direction by the driving unit 35 may stop before or at the time of the contact of the frame member 33 of the wet pad 31 with the lower end portion of the housing 110.

In the lifting structure 100, the lower end portion of the center pin 160 may be supported by the protrusion portion 151 of the pad support 150. The lower end portion of the center pin 160 may be inserted into the through hole 1511 of the protrusion portion 151. In the lifting structure 100, when the second bushing 130 moves vertically, the lower end portion of the center pin 160 may also move vertically through the through hole 1511. The center pin 160 may guide the vertical movement of the second bushing 130. In addition, as the center pin 160 is inserted into the through hole 1511 of the protrusion portion 151, when the second bushing 130 rotates, shaking in the direction perpendicular to the rotation axis RX may be avoided.

Referring to FIG. 9, the lifting structure 100 according to an embodiment may have a detach position 103 in which the wet pad 31 is detached. In the lifting structure 100, the wet pad 31 may be detached. To this end, the height of the housing 110 may be greater than the height of the second bushing 130. The lower end portion of the second bushing 130 may rise to a position higher than the lower end portion of the housing 110. For example, even after the lower end portion of the housing 110 is in contact with the pad support 150, the second rotational driving force of the driving unit 35 may be provided. Accordingly, the first bushing 120 and the middle bushing 140 may continue to rotate in the backward direction, and due to the backward rotation of the middle bushing 140, the second bushing 130 and the pad support 150 fixed thereto may move in the upward direction.

As the rising of the frame member 33 of the wet pad 31 is restricted by the housing 110, the second bushing 130 and the pad support 150 may move in the upward direction with respect to the frame member 33. Accordingly, the frame member 33 of the wet pad 31 may be detached from the pad support 150. In the cleaning device 1 according to an embodiment, the wet pad 31 may be detached automatically from the pad support 150 without a user detaching the wet pad 31 from the pad support 150 by himself.

The foregoing embodiments describe an example structure in which there is a single middle bushing 140 between the first bushing 120 and the second bushing 130, and the center pin 160 is arranged between the first bushing 120 and the second bushing 130. The example structure also includes the feature that the first bushing 120 is surrounded by the middle bushing 140, and the middle bushing 140 is surrounded by the second bushing 130. However, the structure of the lifting structure 100 is not limited thereto and may be modified in various ways.

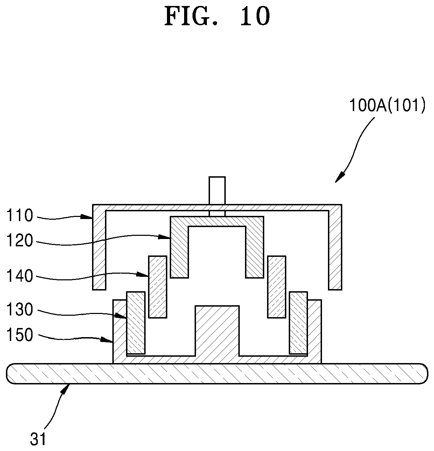

FIGS. 10 to 12 are each a diagram for illustrating another example of a lifting structure (100A, 100B, and 100C) according to an embodiment. In FIGS. 10 to 12, structures are illustrated conceptually for convenience, and in the drawings, like reference numerals denote like components.

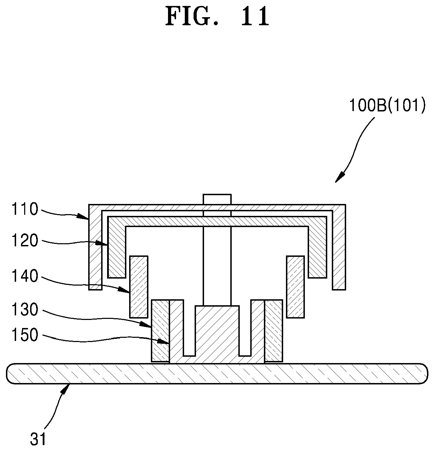

For example, in FIG. 10, in a lifting structure 100A according to an embodiment, the center pin 160 may be omitted. In FIG. 11, in a lifting structure 100B according to an embodiment, the second bushing 130 may be surrounded by the middle bushing 140, and the middle bushing 140 may be surrounded by the first bushing 120. The first diameter D1 of the first bushing 120 may be greater than the middle diameter D3 of the middle bushing 140, and the middle diameter D3 of the middle bushing 140 may be greater than the second diameter D2 of the second bushing 130. The rotational driving force of the driving unit 35 may be delivered to the second bushing 130 without passing through the first bushing 120 and the middle bushing 140; however, the present disclosure is not limited thereto.

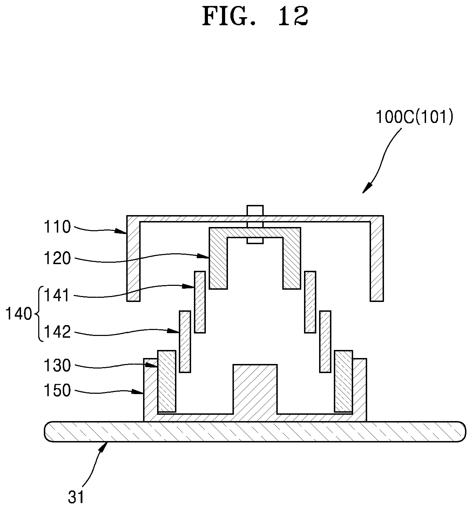

For example, in FIG. 12, a lifting structure 100C according to an embodiment may include a plurality of middle bushings 140C. The middle bushings 140C may include a first middle bushing 1401 connected to the first bushing 120 and a second middle bushing 1402 connected to the second bushing 130 and the first middle bushing 1401. In another example, although it is not shown in the drawings, the number of middle bushings 140 may be 3 or more.

The foregoing embodiments are described focusing on an example of the lifting structure (100, 100A, 100B, and 100C) according to an embodiment in which the second bushing 130 is connected to the first bushing 120 by the middle bushing 140. However, the middle bushing 140 of the lifting structure (100, 100A, 100B, and 100C) may be omitted when necessary. For example, although it is not shown in the drawings, the second bushing 130 and the first bushing 120 may be connected to each other directly without the middle bushing 140.

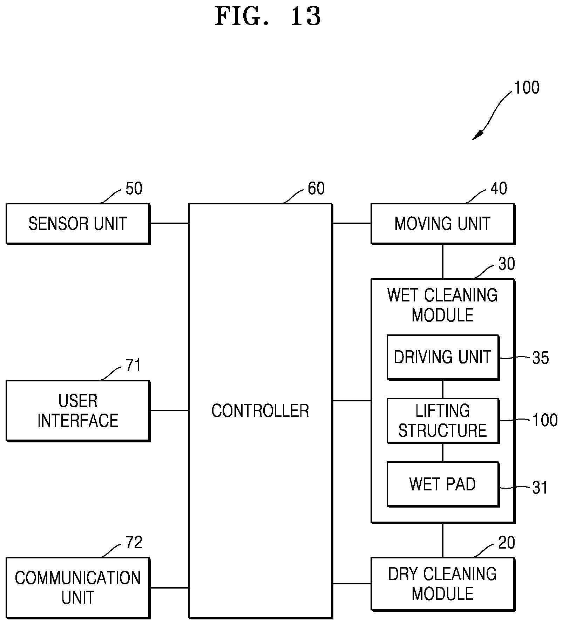

FIG. 13 is a block diagram illustrating an example of the cleaning device 1 according to an embodiment. The components of the cleaning device 1 illustrated in FIG. 13 are just an example. Some of the components may be omitted, or other components that are not shown in the drawing may be added according to an embodiment.

Referring to FIG. 13, the cleaning device 1 according to an embodiment may include a user interface 71 configured to receive an input from a user or display information, a communication unit 72 configured to perform communication with an external terminal, the sensor unit 50 described above, the moving unit 40, and a controller 60 configured to control the dry cleaning module 20 and the wet cleaning module 30.

The user interface 71 may be arranged on one side of the main body 10 to receive a user input or display information. To this end, the user interface 71 may be provided as an input device or a display panel that is publicly known and may include a touch panel and a display panel that are arranged in an integrated manner.

The user interface 71 may receive a user input regarding the wet cleaning. For example, the cleaning device 1 may receive an input for initiating the wet cleaning or an input for discontinuing the wet cleaning through the user interface 71.

The communication unit 72 may perform communication with an external terminal. For example, the communication unit 72 may perform wireless communication with a user terminal. For example, the communication unit 72 may receive an input for initiating the wet cleaning or an input for discontinuing the wet cleaning from the user terminal. The communication unit 72 may perform wireless communication with the station 2.

The sensor unit 50 may sense an indoor environment. For example, the sensor unit 50 may sense an area that does not require cleaning or an obstacle. The sensor unit 50 may sense a state of a battery. The sensor unit 50 may sense a charging state of a battery.

The controller 60 may control operations of the moving unit 40, the wet cleaning module 30, and the dry cleaning module 20. The controller 60 may control operations of the moving unit 40, the wet cleaning module 30, and the dry cleaning module 20 based on a state of the cleaning device 1 or an external input.

For example, when the controller 60 decides that a planned cleaning is completed, the wet pad 31 needs to be replaced or cleaned, or the battery needs to be charged, the controller 60 may control the cleaning device 1 to return to the station 2.

For example, the cleaning device 1 may perform the wet cleaning while the lifting structure 100 is in the lift-down position 101. In this regard, the controller 60 may determine whether the cleaning device 1 is to return to the station 2. For example, when the controller 60 decides that a planned cleaning is completed, the wet pad 31 needs to be replaced or cleaned, or the battery needs to be charged, the controller 60 may determine that the cleaning device 1 is to return to the station 2.

The controller 60 may generate a return command for the station 2 and switch the position of the lifting structure 100 to the lift-up position 102. In the process of switching the position of the lifting structure 100 to the lift-up position 102, the wet pad 31 may be placed apart from the cleaning target surface SF. During or after the switching of the lifting structure 100 to the lift-up position 102, the controller 60 may control the moving unit 40 such that the cleaning device 1 moves towards the station 2.

For example, the controller 60 may control the cleaning device 1 such that the dry cleaning is followed by the wet cleaning.

For example, the cleaning device 1 may receive a dry cleaning command through the user interface 71 or the communication unit 72. The controller 60 may switch the position of the lifting structure 100 of the wet cleaning module 30 to the lift-up position 102 or maintain the lift-up position 102. Then, the cleaning device 1 may perform the dry cleaning.

The controller 60 may determine whether to perform the wet cleaning according to a preset cleaning plan. For example, the controller 60 may determine whether the dry cleaning is completed according to a preset cleaning plan, and when it is determined that the dry cleaning is completed, the controller 60 may further determine whether to perform the wet cleaning.

When the wet cleaning is determined, the controller 60 may control the lifting structure 100 to switch to the lift-down position 101. When the lifting structure 100 is switched to the lift-down position 101, the wet pad 31 may operate while staying in close contact with the cleaning target surface SF. The controller 60 may control the driving unit 35 such that the wet pad 31 rotates in the forward direction while the lifting structure 100 is in the lift-down position 101.

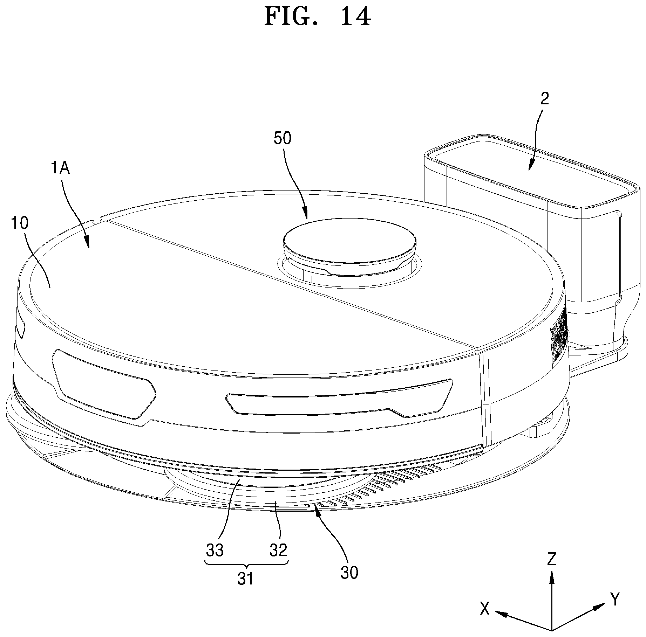

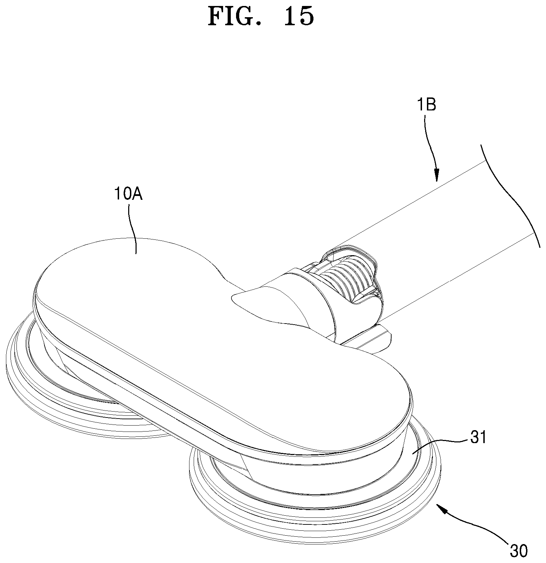

The foregoing embodiments describe an example structure in which the cleaning device 1 includes the dry cleaning module 20 and the wet cleaning module 30 and moves the main body 10 automatically; however, the present disclosure is not limited thereto. For example, as illustrated in FIG. 14, a cleaning device 1A may be a robot cleaner including the wet cleaning module 30 without the dry cleaning module 20. For example, a cleaning device 1B may be a stick-type cleaner including the wet cleaning module 30 and a main body 10A which is moved by a user as illustrated in FIG. 15.

For understanding of the present disclosure, the reference numerals are provided in the embodiments illustrated in the drawings, and particular terms are used to describe the embodiments. The present disclosure is not limited by such particular terms, and the present disclosure includes every components generally perceivable by a person of skill in the art.

The particular implementations shown and described herein are illustrative examples of embodiments and are not intended to otherwise limit the scope of the present disclosure in any way. For the sake of brevity, conventional electronics, control systems, software development and other functional aspects of the systems may not be described in detail. Furthermore, the connecting lines, or connectors shown in the various figures presented are intended to represent exemplary functional relations and/or physical or logical couplings between the various elements. It should be noted that many alternative or additional functional relations, physical connections or logical connections may be present in a practical device. Moreover, no component is essential to the practice of the present disclosure unless the component is specifically described as "essential" or "critical." The expressions such as "including," "comprising," etc. are to be understood as terms used for open ending for description.

The use of the terms "a" and "an" and "the" and similar referents in the context of describing embodiments (especially in the context of the following claims) are to be construed to cover both the singular and the plural. Furthermore, recitation of ranges of values herein are merely intended to serve as a shorthand method of referring individually to each separate value falling within the range, unless otherwise indicated herein, and each separate value is incorporated into the specification as if it were individually recited herein. Also, the steps of all methods described herein can be performed in any suitable order unless otherwise indicated herein or otherwise clearly contradicted by context. Embodiments are not limited to the described order of the steps. The use of any and all examples, or exemplary language (e.g., "such as") provided herein, is intended merely to better illuminate embodiments and does not pose a limitation on the scope of embodiments unless otherwise claimed. In addition, a person of skill in the art may clearly understand that various modifications and changes can be easily made from the present disclosure without departing from the scope or concept of the present disclosure.

According to an embodiment, the present disclosure provides a lifting structure capable of lifting up a wet pad apart from a cleaning target surface while minimizing shaking of the wet pad during rotation and a cleaning device including the lifting structure.

According to an embodiment, the present disclosure provides a lifting structure that includes a wet pad of which height may be adjusted within a wide range and has an advantage in absorption of shock applied to the wet pad and a cleaning device including the lifting structure.

A cleaning device according to an embodiment includes a main body and a wet cleaning module provided in the main body.

The wet cleaning module may include: at least one wet pad that is arranged detachably under the main body and is rotatable around a rotation axis; a lifting structure supporting the wet pad to enable rotation and vertical movement of the wet pad; and a driving unit configured to provide a rotational driving force to the lifting structure to enable the rotation and the vertical movement of the wet pad.

The lifting structure may include a housing, a first bushing configured to enable rotation by receiving the rotational driving force from the driving unit and fixed to an inside of the housing, a second bushing configured to deliver, when the first bushing rotates, a rotational driving force of the first bushing to the wet pad to enable the vertical movement and rotation of the wet pad, and a middle bushing connected between the first bushing and the second bushing and configured to enable a vertical movement and rotation by the rotational driving force of the first bushing when the first bushing rotates.

When the first bushing rotates, the middle bushing may move vertically and rotate, and when the middle bushing rotates, the second bushing may move vertically and rotate.

When the driving unit provides a first rotational driving force for rotation in a first direction, the lifting structure may be in a lift-down position in which the first bushing and the second bushing do not overlap each other in a direction perpendicular to the rotation axis, and when the driving unit provides a second rotational driving force for rotation in a second direction opposite to the first direction, the lifting structure may be in a lift-up position in which the first bushing, the middle bushing, and the second bushing overlap each other in the direction perpendicular to the rotation axis.

In the lifting structure, while the driving unit is providing the first rotational driving force, the first bushing may rotate in a forward direction, the middle bushing may move in a downward direction and then rotate in the forward direction, and the second bushing may move in the downward direction, and while the driving unit is providing the second rotational driving force, the first bushing may rotate in a backward direction, the middle bushing may move in an upward direction and then rotate in the backward direction, and the second bushing may move in the upward direction.

Any one of the first bushing and the middle bushing may include a first thread groove inclined with respect to the rotation axis and a stopper arranged at at least one end portion of the first thread groove in a longitudinal direction, and the other one of the first bushing and the middle bushing may include a first thread protrusion inserted into the first thread groove, and any one of the middle bushing and the second bushing may include a second thread groove inclined with respect to the rotation axis and a stopper arranged at at least one end portion of the second thread groove in a longitudinal direction, and the other one of the middle bushing and the second bushing may include a second thread protrusion inserted into the second thread groove.

The housing may cover at least a part of the middle bushing and the second bushing such that a connection between the middle bushing and the second bushing is not exposed to the outside.

When the driving unit provides the rotational driving force to the lifting structure, a frictional force may be applied between the housing and the second bushing such that the middle bushing and the second bushing move vertically with respect to the housing.

A first diameter of the first bushing may be less than a middle diameter of the middle bushing, and the middle diameter may be less than a second diameter of the second bushing.

A height of the housing may be greater than a height of the second bushing.

The lifting structure may further include a pad support fixed to the second bushing and supporting the wet pad.

The wet pad may include a pad member arranged to be in contact with a cleaning target surface and a frame member detachably supporting the pad member, and the pad support may include a protrusion portion protruding to be inserted into the second bushing and to be detachably assembled with the frame member.

The lifting structure may further include a center pin arranged in the first bushing, the middle bushing, and the second bushing and extending along the rotation axis.

An upper end portion of the center pin may be supported by the first bushing, and a lower end portion of the center pin may be supported by the protrusion.

The protrusion portion may have a through hole through which the lower end portion of the center pin passes.

The pad support may include
a friction portion arranged outside of the second bushing and in contact with the housing such that the frictional force is applied between the housing and the second bushing.

According to an embodiment, a lifting structure may be used in a cleaning device and may support a wet pad to enable rotation and vertical movement of the wet pad. The lifting structure may include a housing, a first bushing that is rotatable with respect to the housing and is fixed to an inside of the housing, a second bushing that delivers, when the first bushing rotates, a rotational driving force of the first bushing to the wet pad to enable the vertical movement and rotation of the wet pad, and a middle bushing connected between the first bushing and the second bushing and arranged to move vertically and rotate by the rotational driving force of the first bushing when the first bushing rotates.

When the first bushing rotates, the middle bushing may move vertically and rotate, and when the middle bushing rotates, the second bushing may move vertically and rotate.

A cleaning device according to an embodiment includes a main body and a wet cleaning module provided in the main body.

The wet cleaning module may include at least one wet pad that is arranged detachably under the main body and is rotatable around a rotation axis, a lifting structure supporting the wet pad to enable rotation and vertical movement of the wet pad, and a driving unit configured to provide a rotational driving force to the lifting structure to enable the rotation and the vertical movement of the wet pad.

The lifting structure may include a housing, a first bushing configured to enable rotatation by receiving the rotational driving force from the driving unit and fixed to an inside of the housing, a middle bushing configured to enable a vertical movement and rotation by a rotational driving force received from the first bushing, and a second bushing configured to enable a vertical movement and rotation by a rotational driving force received from the middle bushing and to deliver a rotational driving force to the wet pad.

In the lifting module according to the embodiments described above and the cleaning device including the same, the wet pad may be lifted up to be apart from the cleaning target surface while shaking of the wet pad during rotation is minimized.

In addition, the lifting module according to an embodiment and the cleaning device including the same may include the wet pad of which height may be adjusted within a wide range and have an advantage in absorption of shock applied to the wet pad.

## Claims

1. A cleaning device (1) comprising: a main body (10); and a wet cleaning module (30) provided in the main body,
wherein the wet cleaning module (30) comprises:
at least one wet pad (31) that is arranged detachably under the main body and is rotatable around a rotation axis (RX);
a lifting structure (100) supporting the wet pad to enable rotation and vertical movement of the wet pad; and
a driving unit (35) configured to provide a rotational driving force to the lifting structure to enable the rotation and the vertical movement of the wet pad,
the lifting structure (100) comprises:
a housing (110);
a first bushing (120) configured to enable rotation by receiving a the rotational driving force from the driving unit and fixed to an inside of the housing;
a second bushing (130) configured to deliver, when the first bushing rotates, a rotational driving force of the first bushing to the wet pad to enable the vertical movement and rotation of the wet pad; and
a middle bushing (140) connected between the first bushing and the second bushing and configured to enable a vertical movement and rotation by the rotational driving force of the first bushing when the first bushing rotates, and
wherein, when the first bushing (120) rotates, the middle bushing (140) moves vertically and rotates, and when the middle bushing (140) rotates, the second bushing (130) moves vertically and rotates.

2. The cleaning device of claim 1, wherein, when the driving unit provides a first rotational driving force for rotation in a first direction, the lifting structure is in a lift-down position (101) in which the first bushing and the second bushing do not overlap each other in a direction perpendicular to the rotation axis, and
when the driving unit provides a second rotational driving force for rotation in a second direction opposite to the first direction, the lifting structure is in a lift-up position (102) in which the first bushing, the middle bushing, and the second bushing overlap each other in the direction perpendicular to the rotation axis.

3. The cleaning device of claim 2, wherein, in the lifting structure, while the driving unit is providing the first rotational driving force, the first bushing rotates in a forward direction, the middle bushing moves in a downward direction and then rotates in the forward direction, and the second bushing moves in the downward direction, and
while the driving unit is providing the second rotational driving force, the first bushing rotates in a backward direction, the middle bushing moves in an upward direction and then rotates in the backward direction, and the second bushing moves in the upward direction.

4. The cleaning device of claim 3, wherein any one of the first bushing and the middle bushing comprises a first thread groove (141) inclined with respect to the rotation axis and a stopper (143) arranged at at least one end portion of the first thread groove in a longitudinal direction, and the other one of the first bushing and the middle bushing comprises a first thread protrusion (121) inserted into the first thread groove, and
any one of the middle bushing and the second bushing comprises a second thread groove (132) inclined with respect to the rotation axis and a stopper (133) arranged at at least one end portion of the second thread groove in a longitudinal direction, and the other one of the middle bushing and the second bushing comprises a second thread protrusion (142) inserted into the second thread groove.

5. The cleaning device of any one of claims 1 to 4, wherein the housing covers at least a part of the middle bushing and the second bushing such that a connection between the middle bushing and the second bushing is not exposed to the outside.

6. The cleaning device of claim 4, wherein, when the driving unit provides the rotational driving force to the lifting structure, a frictional force is applied between the housing and the second bushing such that the middle bushing and the second bushing move vertically with respect to the housing.

7. The cleaning device of any one of claims 1 to 6, wherein a first diameter (D1) of the first bushing is less than a middle diameter (D3) of the middle bushing, and the middle diameter is less than a second diameter (D2) of the second bushing.

8. The cleaning device of any one of claims 1 to 7, wherein a height of the housing is greater than a height of the second bushing.

9. The cleaning device of any one of claims 1 to 8, wherein the lifting structure further comprises a pad support (150) fixed to the second bushing and supporting the wet pad.

10. The cleaning device of claim 9, wherein the wet pad (31) comprises: a pad member (32) arranged to be in contact with a cleaning target surface; and a frame member (33) detachably supporting the pad member, and
the pad support comprises a protrusion portion (151) protruding to be inserted into the second bushing and to be detachably assembled with the frame member.

11. The cleaning device of claim 10, wherein the lifting structure further comprises a center pin (160) arranged in the first bushing, the middle bushing, and the second bushing and extending along the rotation axis.

12. The cleaning device of claim 11, wherein an upper end portion of the center pin is supported by the first bushing, and a lower end portion of the center pin is supported by the protrusion portion.

13. The cleaning device of claim 12, wherein the protrusion portion has a through hole (1511) through which the lower end portion of the center pin passes.

14. The cleaning device of any one of claims 9 to 13, wherein the pad support comprises a friction portion (152) arranged outside of the second bushing and in contact with the housing such that a frictional force is applied between the housing and the second bushing.

15. A cleaning device (1) comprising: a main body (10); and a wet cleaning module (30) provided in the main body,
wherein the wet cleaning module (30) comprises:
at least one wet pad (31) that is arranged detachably under the main body and is rotatable around a rotation axis (RX);
a lifting structure (100) supporting the wet pad to enable rotation and vertical movement of the wet pad; and
a driving unit (35) configured to provide a rotational driving force to the lifting structure to enable the rotation and the vertical movement of the wet pad, and
the lifting structure (100) comprises:
a housing (110);
a first bushing (120) configured to enable rotatation by receiving a the rotational driving force from the driving unit and fixed to an inside of the housing;
a middle bushing (140) configured to enable a vertical movement and rotation by a rotational driving force received from the first bushing; and
a second bushing (130) configured to enable a vertical movement and rotation by a rotational driving force received from the middle bushing and to deliver a rotational driving force to the wet pad.
